# EUROPEAN PATENT SPECIFICATION

(11) **EP 2 422 264 B1**
(45) Date of publication and mention of the grant of the patent: **07.11.2018**
(21) Application number: 10767534.0
(22) Date of filing: 14.04.2010
(51) Int. Cl.: G06F 3/023, G06F 3/038, G06F 3/0488, G06F 3/0489

(54) **CONTEXT-BASED STATE CHANGE FOR AN ADAPTIVE INPUT DEVICE**
KONTEXTBASIERTE STATUSÄNDERUNG FÜR EINE ADAPTIVE EINGABEVORRICHTUNG
CHANGEMENT D'ÉTAT À BASE DE CONTEXTE POUR UN DISPOSITIF D'ENTRÉE ADAPTATIF

(30) Priority: 20.04.2009 US 426848
(43) Date of publication of application: 29.02.2012
(73) Proprietor: Microsoft Technology Licensing, LLC, Redmond, WA 98052 (US)
(72) Inventor: BALL, Vincent, Redmond, Washington 98052-6399 (US); STRANDE, Hakon, Redmond, Washington 98052-6399 (US); YOUNG, Robert D., Redmond, Washington 98052-6399 (US); MAIL, Scott M., Redmond, Washington 98052-6399 (US)
(74) Representative: Goddar, Heinz J.
(86) International application number: PCT/US2010/031104
(87) International publication number: WO 2010/123736

(56) References cited:
- EP-A1- 1 387 338
- KR-A- 20100 027 502
- KR-B1- 100 524 019
- US-A- 6 111 527
- US-A1- 2004 066 374
- US-A1- 2005 035 949
- US-A1- 2005 099 403
- US-A1- 2006 281 448
- US-A1- 2006 284 847

## Description

### BACKGROUND

Input devices such as keyboards are often used with computers. Keyboards typically provide alpha-numeric inputs arranged in a familiar QWERTY pattern, a number pad, and/or function keys. Some keyboards include media buttons, volume controls, and/or quick launch buttons. In some cases the quick launch buttons may be assigned a user-specified functionality by opening a keyboard control program and associating a specific function with the quick launch button. One drawback with such an approach is that it is difficult for a user to ascertain the function of a user assignable key upon visual inspection, since the key itself is it typically labeled with a non-descript label. In this case, the user relies upon his or her memory to recall the assigned function. Further, the position of these assignable keys is fixed, and the fixed position may not be suitable for the assignment of certain functions. As a result, assignable keys have not achieved universal popularity.

Document US2004/0066374-A1 discloses a keyboard having keys in or on which are situated changeable display elements so that an image displayed on the display element is viewable on the keycap surface by a user. A keyboard mapping is changeable to an alternative mapping via the use of one or more mapping control keys, and the indicia displayed on the keys of the keyboard are changed electronically to correspond to the selected keyboard mapping. Document EP1387338-A1 discloses replacing permanently engraved keycaps with caps having embedded large area display screens, which enables the labelling of the keys to be changed automatically to display whatever function a program is calling for at a particular time. Document US6111527 discloses a keyboard with a touch-sensitive screen portion that is programmable to automatically reconfigure, depending on the application in use.

### SUMMARY

The invention is set out in the appended set of claims. The embodiments and/or examples of the following description which are not covered by the appended claims are considered as not being part of the present invention.

This Summary is provided to introduce concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows an environment for an example embodiment of an adaptive input device that may undergo a context-based state change.
FIG. 2 shows an example embodiment of adaptive input devices in the form of a mechanical keyboard and a virtual keyboard on a touch screen user input device.
FIG. 3 shows an example embodiment of adaptive input devices in the form of a mechanical keyboard and a virtual keyboard on a touch screen user input device, illustrating a change in a keyboard display and/or a keyboard mapping in response to a change in a computing device state, a user state, or an application state.
FIG. 4 shows a process flow depicting an embodiment of a method for context-based state change for an adaptive input device.

### DETAILED DESCRIPTION

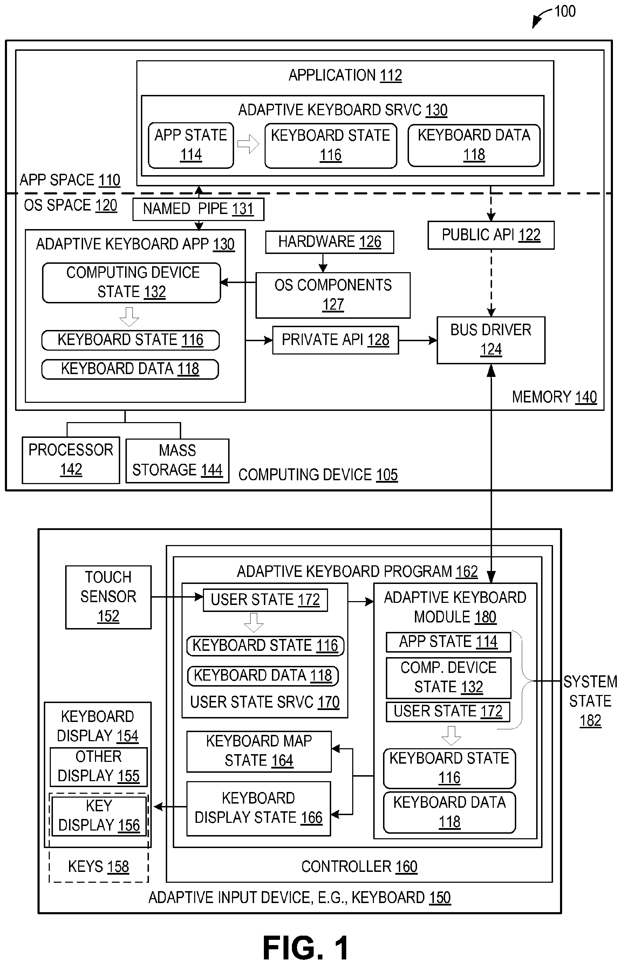

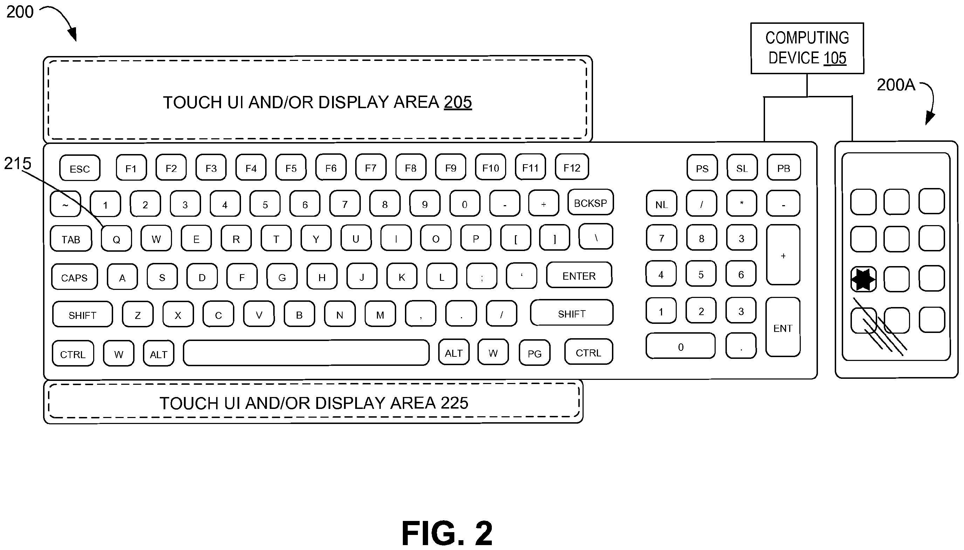

FIG. 1 shows an environment 100 for an example embodiment of an adaptive input device such as a keyboard 150 that may undergo a context-based state change. Environment 100 includes a computing device 105 having a memory 140, a processor 142 and a mass storage 144. In some embodiments mass storage 144 may be a hard drive, solid state memory, a rewritable disc, etc. In the illustrated embodiment, memory 140 includes an operating system space 120 and an application space 110. Application space further includes an application 112 having an adaptive keyboard application 130 containing an application state 114, and an associated keyboard state 116 and keyboard data 118. As discussed in detail below and illustrated in Fig. 2, keyboard 150 may be a mechanical keyboard 200 with mechanically depressible keys, or a virtual keyboard 200A displayed on a touch sensitive screen of an adaptive input device, for example. Other adaptive input devices are also contemplated, which are equipped with displays and touch sensors as described below.

Returning to Fig. 1, in the illustrated embodiment, application 112 may communicate with keyboard 150 via an interprocess communication mechanism such as a named pipe 131 to an adaptive keyboard application 130, which in turn communicates with keyboard 150 through a bus driver 124. Adaptive keyboard application 130, may for example, be a service running on the operating system, and may interpret application specific events received via the named pipe 131 and in response send user interface messages to the keyboard 150. Bus driver 124 may be configured to provide support for various transport protocols, such as Universal Serial Bus (USB), Transport Control Protocol over Internet Protocol (TCP/IP), Bluetooth, etc., and send the messages over a bus using one or more of these protocols to the keyboard 150. Alternatively, the application 112 may communicate with the keyboard 150 through an application programming interface, such as public application programming interface 122, and through bus driver 124.

Via either route, application 112 may send a message, an input, or other communication to the keyboard 150, which message includes the application state 114, or the associated keyboard state 116 or keyboard data 118. However, the disclosure may not be so limited and the application state 114 may be mapped to keyboard state 116 or keyboard data 118 and otherwise communicated to keyboard 150.

In operating system space 120, computing device 105 includes an adaptive keyboard application 130 storing a computing device state 132, a keyboard state 116 and keyboard data 118. Computing device state 132 may receive input from operating system components 127 which may further receive inputs from hardware 126 of computing device 105 or attached devices. Adaptive keyboard application 130 communicates with keyboard 150 through a private application programming interface 128 and bus driver 124. For example, adaptive keyboard application 130 may send a message, an input, or other communication to keyboard 150 that includes the computing device state 132, or the associated keyboard state 116 or keyboard data 118. However, the disclosure may not be so limited and the computing device state 132 may be mapped to keyboard state 116 or keyboard data 118 and otherwise communicated to keyboard 150.

Turning now to keyboard 150, which includes a controller 160 coupled with a plurality of keys 158 and a keyboard display 154 and including an adaptive keyboard program 162. In some embodiments keyboard 150 may include a touch sensor 152 to detect a change in user state. For example, touch sensor 152 may be an optical touch sensor configured to optically detect a user touch of a region of the keyboard, a capacitive touch sensor configured to detect an electrical change from a touch by a user, or an accelerometer touch sensor configured to detect movement of a key due to touch, etc. In some embodiments, keyboard 150 may include a key display 156 on one or more of the keys 158, or a display 155 on the keyboard, projected from the keyboard, attached to the keyboard, etc. Additionally, keyboard display 154 may include a plurality of displays, wherein adaptive keyboard program 162 may update each of the plurality of displays according to respective system state changes, user selected display content, system options, etc.

Keyboard 150 sends and receives communications from computing device 105 through bus driver 124 in the computing device. Adaptive keyboard program 162 further includes an adaptive keyboard module 180, a keyboard mapping state 164, a keyboard display state 166 and a user state service 170. User state service 170 further includes a user state 172 as sensed by touch sensor 152, and an associated keyboard state 116 and keyboard data 118.

Adaptive keyboard module 180 includes one or more inputs indicating a system state 182, including one or more of an application state 114, the computing device state 132 and/or a user state 172. Alternately, adaptive keyboard module 180 may receive an already associated keyboard state 116 and/or keyboard data 118, wherein the keyboard state 116 and keyboard data is associated with a system state by the adaptive keyboard application 130 running in the application space 110 or operating system space 120, as non-limiting examples.

In one embodiment, keyboard 150 may be configured to provide a context-based state change. For example, adaptive keyboard program 162 may be configured to receive a state input indicating a change in a system state and change keyboard data 118 in response to the state input. In an example embodiment, the keyboard data 118 includes one or more of image data or keyboard mapping data, and the controller is configured to adjust the keyboard display using the image data and further configured to adjust a keyboard mapping state according to the keyboard mapping data. Image data may be icons, menu items, etc., from application 112, operating system components 127, configuration options for hardware 126, etc.

In some examples, image data that may be displayed on one or more keys can come from an application 112 running on the computing device 105, can come from the operating system of the computing device 105, it could be saved in memory on the keyboard 150, etc. For example, to display image data on a specific key or to a specific display portion on the keyboard, the adaptive keyboard program 162 may receive keyboard state 116 from the adaptive keyboard application 130 running in the application 112 or the operating system space 120 on computing device 105, or from the user state service 170 on the keyboard 150, as will be explained in the following paragraphs in more detail.

In the invention the change in system state is a change in application state 114 in computing device 105 in communication with the keyboard 150. For example, the keyboard 150 may be configured to receive the change in the application state 114 through a public application programming interface 122 and be further configured to display on the keyboard display 154 user options related to the change in application state 114.

In some embodiments, a change in application state 114 may be determined based on whether the application 112 is an active application, whether the application 112 is operating in the computing background, whether there are different states within the application while the application 112 is active, etc. In one example, in a word processing program if text is selected, a change in application state 114 may be detected. In response to the change in application state 114, functionality may be displayed and exposed to a user off the keyboard through a keyboard display, key mapping, etc.

As an example, if a user in the word processing application had previously selected text and changed the text to blue text, the change in application state 114 may be detected when the text is selected and a keyboard display may show multiple colors to change the text to. In a particular example, the previous actions of the user may also be ranked according to frequency, a recent change, in relation to the change in application state 114, etc., and the keyboard display can order a list of options for the user to select. In this way, if the user most recently selected text and converted the text to blue text, but had previously selected the text and converted it to red text, a first option may be displayed of converting the text to blue text, a second option may be displayed to convert the text to red text, etc.

In another exemplary change in application state 114, when a slide show presentation program is first launched, there may be a state where the program queries a user if they are creating a new slide show or if the user wants to open a recent slide show. If a user selects to open a recent slide show, the adaptive keyboard program 162 may detect this change in application state 114 and change the keyboard display 154 to show the ten most recent slide show presentations that have been opened. Furthermore, once a slide show is selected, the adaptive keyboard program 162 could detect another state change and display on the keyboard display 154 options within the opened slide show. For example, as a user navigates the opened slide show, or as a user selects an animation to include in the slide show, functionality associated with the navigation or the animation may be exposed to the user through the keyboard display 154 and the user could select the functionality through the keyboard without keystroke sequences that take the user into the menu options.

In another example not covered by the claims, the change in system state may be a change in a computing device state 132 in communication with the keyboard 150. For example, the keyboard may be configured to receive the change in the computing device state 132 through a private application programming interface 128 and may be further configured to display on the keyboard display 154 user options related to the change in computing device state 132. For example, a change in a computing device state 132 may include a computer turning on, turning off, going to sleep, being placed in a standby state, turning on a screen saver, as non-limiting examples. In this way, a detectable change in a computing device state 132 may be displayed to a user through keyboard display 154 using adaptive keyboard program 162.

In some examples not covered by the claims, the change in system state may be detected by touch sensor 152. For example, the change in system state may be a change in a user state 172, where the keyboard is configured to display on the keyboard display 154 user options related to the change in user state 172. For example, a change in a user state 172 may be detected when user touches the keyboard, when a keyboard is moved or picked up, when a user is approaching a keyboard, when a user presses one or more keys, or a key sequence, when a user interacts with an interactive display on the keyboard that is displaying one or more user options, etc. In this way, when a user state changes, the keyboard 150 may be configured to change a display state in response to the user state change.

In some aspects of the disclosure, the keyboard 150 may be configured to change the keyboard mapping state 164 of the plurality of keys 158 in response to the state input indicating a change in application state 114, computing device state 132, or user state 172. As an example, adaptive keyboard program 162 may comprise a look up table (LUT) configured to map a key code from application 112 to a particular key and provide the key code in response to a subsequent push of the key. In a game application example, a "Q" button press on a keyboard may fire a weapon within the game. The adaptive keyboard program 162 may then be configured to communicate with the game application, map one or more key codes from the game application to respective keys, and in response to a button press on a mapped key, in this example a "Q", the adaptive keyboard program 162 may send to the game the respective codes, in this example the key code for firing the weapon.

In some embodiments, adaptive keyboard program 162 may adjust a keyboard display or a keyboard mapping state in response to a combination of state changes. For example, a change in user state 172 can be detected when a user approaches the keyboard 150 while an attached computing device is in a locked state. In this way, the adaptive keyboard program can illuminate keyboard keys 158 when the user gets within range and also display instructions to the user to type in a password to unlock the computing device.

FIG. 2 shows an example embodiment of a mechanical keyboard 200 with keyboard display 154 and other display 155. In some embodiments, a keyboard display may provide input and output functionality. One example of a display providing input and output functionality is a touch screen. Keyboard 200 comprises a plurality of keys including example key Q 215 in the key mapping embodiment as described above with reference to FIG. 1. FIG. 2 also illustrates a virtual keyboard 200A of a touch screen user input device. The touch screen user input device is configured with a keyboard display and touch sensor configured to receive touch input from a user. The virtual keyboard 200A may include keys of various sizes and shapes that are displayed on the touch screen user input device, as illustrated. In one example key, a star is depicted.

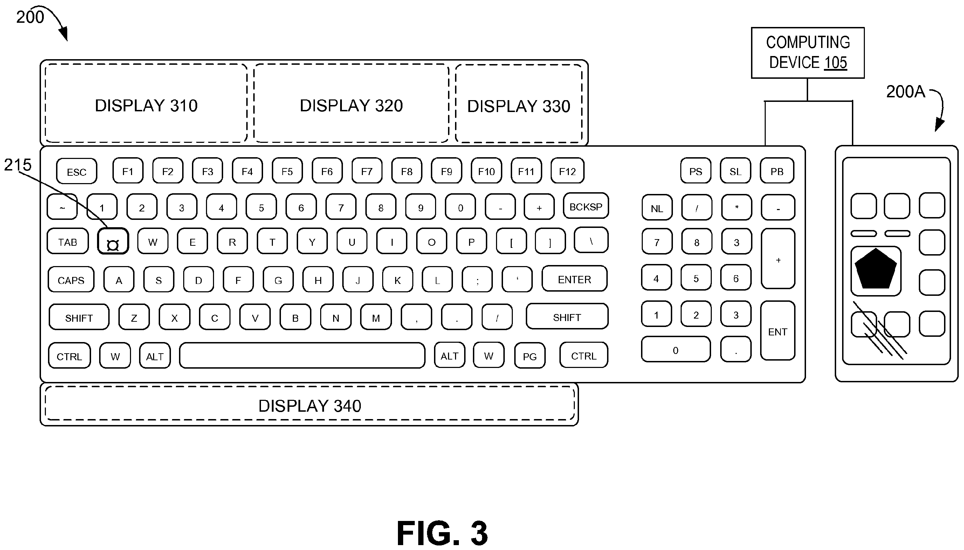

FIG. 3 shows an example embodiment of a keyboard 200 illustrating a change in a keyboard display and/or a keyboard mapping in response to a change in a computing device state, a user state, or an application state. With reference back to FIG. 1, a keyboard may receive a system state such as an application state 114, a computing device state 132, a keyboard state 116, or keyboard data 118, etc., through an application programming interface or named pipe and adaptive keyboard application as described above, and into an adaptive keyboard module 180 that may generate a state change in the keyboard in response to the received state change. Additionally, a keyboard may have sensory apparatus to detect a system state change related to a change in user state 172, and in response generate a state change in the keyboard in response to the change in user state. FIG. 3 illustrates keyboard 200 after a system state change with a different image displayed on display 215 shown on the previous "Q" button. In some embodiments the button will be mapped to a specified functionality, such as the weapon firing example in FIG. 1 as described above. FIG. 3 also illustrates keyboard 200A showing a key formed in a different size and shape, and with a different image, namely a pentagon, depicted thereon, as compared with the star of the previous figure, in response to the system state change.

FIG. 3 illustrates display 310, display 320, display 330, and display 340 as provided on keyboard display 154 and other display 155 from FIG. 2. In some embodiments, keyboard display 154 and other display 155 may be controlled by adaptive keyboard module 180 running in adaptive keyboard program 162 on controller 160. In this way, adaptive keyboard module 180 may display image data and/or other content provided by computing device 105, application 112, by a user input, in response to a user state 172, or otherwise as stored on an attached computing device 105 or resident in memory on the keyboard. Further, a plurality of application programs may be configured to output display data to different regions of the keyboard concurrently, thereby sharing the composite keyboard display.

In an example use case scenario, display 310 may display a standby computing device state 132 as received from computing device 132 through a private application programming interface 128 and a bus driver 124. Then, display 310 may prompt a user for a password to unlock the computing device 132 if it is locked, as an example. As another example use case scenario, once the computer is unlocked, the display 320 may provide menu options for media player application as received through public application programming interface 122 and bus driver 124. In this way, display 320 may display the menu options for the media player for recently played audio files in response to sensing a user approaching the keyboard.

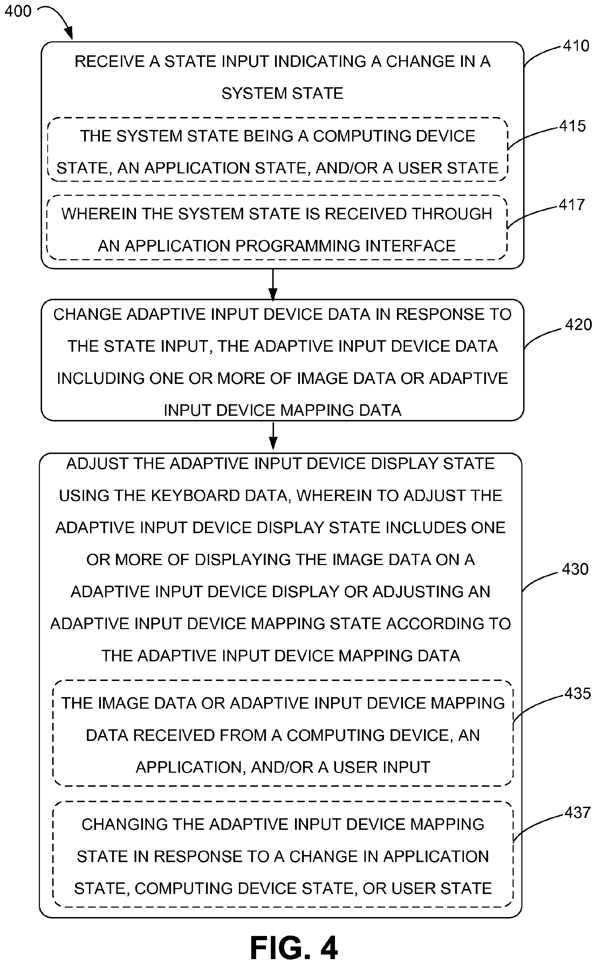

Continuing with the Figures, FIG. 4 shows a flow diagram of an embodiment of a method 400 for a context-based state change of an adaptive input device such as a virtual or mechanical keyboard. First, as indicated in block 410, method 400 comprises receiving a state input indicating a change in a system state. As examples, the system state may be one or more of an application state, a computing device state, or a user state, as illustrated in block 415. In this way, a change in an application state, a computing device state, or a user state may be depicted on an adaptive input device display, by altering the appearance of the display to alert a user to the change of system state, for example.

Method 400 also comprises changing adaptive input device data in response to the state input, the adaptive input device data including one or more of image data or adaptive input device mapping data, as indicated in block 420. Next, method 400 comprises adjusting the adaptive input device display state using the adaptive input device data, wherein adjusting the adaptive input device display state includes one or more of displaying the image data on an adaptive input device display or adjusting an adaptive input device mapping state according to the adaptive input device mapping data, as indicated at 430. In some embodiments, the image data or adaptive input device mapping data may be received from a computing device, an application, and/or a user input, as shown in block 435.

According to the invention, method 400 includes detecting a change in an application state, and generating the state input indicating a change in an application state. For example, the state input indicating a change in an application state may be received through an application programming interface, which may be public, of a computing device, as indicated in block 417. In another embodiment, the state input may be received from an application via an interprocess communication mechanism such as a named pipe, at an adaptive input device application, which in turn is configured to forward the state input via a bus driver to the adaptive input device. In this way, a keyboard may adjust a keyboard display, a key mapping, etc., in response to the change in application state.

In an example computing device state change embodiment, method 400 may further comprise detecting a change in a computing device state, and generating the state input indicating a change in computing device state. As an example, in response to receiving a state input indicating a change in a computing device state through an application programming interface, which may be private, as indicated in block 417, a keyboard may adjust a keyboard display, key mapping, etc., in response to one or more of a change in an operating system component in the computing device or a hardware component in the computing device.

In an example user state change embodiment, method 400 may further comprise detecting a change in a user state using a touch sensor on a keyboard, and generating the state input indicating a change in a user state. In some embodiments, method 400 may further comprise changing a keyboard mapping state in response to a change in application state, computing device state, or user state as illustrated in block 437.

As described above, the adaptive input device may include a keyboard, such as a mechanical keyboard with mechanically depressible keys, and/or a touch screen device configured to present a virtual keyboard. Other adaptive input devices are also contemplated, which include both touch sensors and displays as described above.

It will be appreciated that the embodiments described herein may be implemented, for example, via computer-executable instructions or code, such as programs, stored on a computer-readable storage medium and executed by a computing device. Generally, programs include routines, objects, components, data structures, and the like that perform particular tasks or implement particular abstract data types. As used herein, the term "program" may connote a single program or multiple programs acting in concert, and may be used to denote applications, services, or any other type or class of program. Likewise, the terms "computer" and "computing device" as used herein include any device that electronically executes one or more programs, including, but not limited to, a keyboard with computing functionality and other computer input devices.

It will further be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated may be performed in the sequence illustrated, in other sequences, in parallel, or in some cases omitted. Likewise, the order of any of the above-described processes is not necessarily required to achieve the features and/or results of the embodiments described herein, but is provided for ease of illustration and description.

The subject matter of the present disclosure includes all novel and nonobvious combinations and subcombinations of the various processes, systems and configurations, and other features, functions, acts, and/or properties disclosed herein, as well as any and all equivalents thereof. The scope of the invention is however solely defined by the appended claims.

## Claims

1. A method (400) of providing context-based state change for an adaptive keyboard (150) comprising a plurality of keys (158) and a keyboard display (154), the method comprising:
receiving (410) an application state input indicating a change in an application state (114) of a computer application (112) and receiving (435) keyboard data (118), said keyboard data (118) including image data and keyboard mapping data;
changing (420) keyboard data (118) of the adaptive keyboard (150) in response to the application state input, the changed keyboard data including the image data and the keyboard mapping data; and
adjusting (430) a keyboard display state using the changed keyboard data (118), wherein adjusting the keyboard display state includes displaying the image data on said keyboard display and adjusting a keyboard mapping state (164) of the plurality of keys (158) according to the keyboard mapping data,
the method being **characterised in that** the received keyboard data (118) is received from the computer application (112).

2. The method of claim 1, wherein the adaptive input device includes one or more of a mechanical keyboard with mechanically depressible keys, and a touch screen device configured to present a virtual keyboard,

3. The method of claim 1, further comprising:
detecting, by the computer application, the change in the application state; and
generating, by the computer application, the application state input.

4. The method of claim 3 further comprising:
receiving the application state input through a public application programming interface.

5. A keyboard (150) configured for a context-based state change, the keyboard comprising:
a plurality of keys (158);
a keyboard display (154); and
a controller (160) coupled with the plurality of keys (158) and the keyboard display (154) and including an adaptive keyboard program (162), the adaptive keyboard program (162) being configured to receive an application state input indicating a change in an application state (114) of a computer application (112) and to receive keyboard data (118), the keyboard data (118) including image data and keyboard mapping data, wherein the controller (160) is configured to, in response to the application state input, adjust the keyboard display (154) using the image data and to adjust a keyboard mapping state (164) of the plurality of keys (158) according to the keyboard mapping data,
the keyboard being **characterised in that** the controller is configured to receive the keyboard data (118) from the computer application (112).

6. The keyboard of claim 5, wherein the keyboard is further configured to receive the change in the application state through a public application programming interface and is further configured to display on the keyboard display user options related to the change in application state.

## Patentansprüche

1. Verfahren (400) zum Bereitstellen von kontextbasierter Statusänderung für eine adaptive Tastatur (150) umfassend eine Vielzahl von Tasten (158) und eine Tastaturanzeige (154), wobei das Verfahren umfasst:
Empfangen (410) einer Applikationsstatuseingabe, die eine Änderung in einem Applikationsstatus (114) einer Computerapplikation (112) angibt, und Empfangen (435) von Tastaturdaten (118), wobei die Tastaturdaten (118) Bilddaten und Tastaturzuordnungsdaten einschließen;
Ändern (420) von Tastaturdaten (118) der adaptiven Tastatur (150) in Reaktion auf die Applikationsstatuseingabe, wobei die geänderten Tastaturdaten die Bilddaten und Tastaturzuordnungsdaten einschließen; und
Anpassen (430) eines Tastaturanzeigestatus der geänderten Tastaturdaten (118),
wobei Anpassen des Tastaturanzeigestatus Anzeigen der Bilddaten auf der Tastaturanzeige und Anpassen eines Tastaturzuordnungsstatus (164) der Vielzahl von Tasten (158) gemäß den Tastaturzuordnungsdaten einschließt,
wobei das Verfahren **dadurch gekennzeichnet ist, dass** die empfangenen Tastaturdaten (118) von der Computerapplikation (112) empfangen werden.

2. Verfahren nach Anspruch 1, wobei die adaptive Eingabevorrichtung eine oder mehrere von einer mechanischen Tastatur mit mechanisch drückbaren Tasten und einer Touchscreen-Vorrichtung einschließt, die konfiguriert ist, um eine virtuelle Tastatur darzustellen.

3. Verfahren nach Anspruch 1, ferner umfassend:
Detektieren der Änderung in dem Applikationsstatus durch die Computerapplikation; und
Generieren der Applikationsstatuseingabe durch die Computerapplikation.

4. Verfahren nach Anspruch 3, ferner umfassend:
Empfangen der Applikationsstatuseingabe durch eine öffentliche Applikationsprogrammierschnittstelle.

5. Tastatur (150), die für eine kontextbasierte Statusänderung konfiguriert ist, wobei die Tastatur umfasst:
eine Vielzahl von Tasten (158);
ein Tastaturanzeige (154); und
eine Steuerung (160), die mit der Vielzahl von Tasten (158) und der Tastaturanzeige (154) gekoppelt ist und ein adaptives Tastaturprogramm (162) einschließt, wobei das adaptive Tastaturprogramm (162) konfiguriert ist, um eine Applikationsstatuseingabe zu empfangen, die eine Änderung in einem Applikationsstatus (114) einer Computerapplikation (112) angibt, und Tastaturdaten (118) zu empfangen, wobei die Tastaturdaten (118) Bilddaten und Tastaturzuordnungsdaten einschließen, wobei die Steuerung (160) konfiguriert ist, um in Reaktion auf die Applikationsstatuseingabe die Tastaturanzeige (154) unter Verwendung der Bilddaten anzupassen und einen Tastaturzuordnungsstatus (164) der Vielzahl von Tasten (158) gemäß den Tastaturzuordnungsdaten anzupassen,
wobei die Tastatur **dadurch gekennzeichnet ist, dass** die Steuerung konfiguriert ist, um die Tastaturdaten (118) von der Computerapplikation (112) zu empfangen.

6. Tastatur nach Anspruch 5,
wobei die Tastatur ferner konfiguriert ist, um die Änderung im Applikationsstatus über eine öffentliche Applikationsprogrammierschnittstelle zu empfangen und ferner konfiguriert ist, um auf der Tastaturanzeige Benutzeroptionen anzuzeigen, die mit der Änderung des Applikationsstatus zusammenhängen.

## Revendications

1. Procédé (400) pour fournir un changement d'état basé sur le contexte pour un clavier adaptatif (150) comprenant une pluralité de touches (158) et un affichage de clavier (154), le procédé comprenant de :
recevoir (410) une entrée d'état d'application indiquant un changement dans un état d'application (114) d'une application informatique (112), et recevoir (435) des données de clavier (118), lesdites données de clavier (118) comprenant des données d'image et des données de définition de clavier ;
modifier (420) des données de clavier (118) du clavier adaptatif (150) en réponse à l'entrée d'état d'application, les données de clavier modifiées comprenant les données d'image et les données de définition de clavier ; et
régler (430) un état d'affichage de clavier en utilisant les données de clavier modifiées (118), dans lequel le réglage de l'état d'affichage de clavier comprend d'afficher les données d'image sur ledit affichage de clavier et de régler un état de définition de clavier (164) de la pluralité de touches (158) selon les données de définition de clavier,
le procédé étant **caractérisé en ce que** les données de clavier reçues (118) sont reçues à partir de l'application informatique (112).

2. Procédé selon la revendication 1, dans lequel le dispositif d'entrée adaptatif comprend l'un ou plusieurs parmi un clavier mécanique à touches enfonçables mécaniquement, et un dispositif à écran tactile configuré pour présenter un clavier virtuel.

3. Procédé selon la revendication 1, comprenant en outre de :
détecter, par l'application informatique, le changement d'état de l'application ; et
générer, par l'application informatique, l'entrée d'état de l'application.

4. Procédé selon la revendication 3, comprenant en outre de :
recevoir l'entrée d'état de l'application par l'intermédiaire d'une interface de programmation d'application publique.

5. Clavier (150) configuré pour un changement d'état basé sur le contexte, le clavier comprenant :
une pluralité de touches (158) ;
un affichage de clavier (154) ; et
un contrôleur (160) couplé à la pluralité de touches (158) et à l'affichage de clavier (154) et comprenant un programme de clavier adaptatif (162), le programme de clavier adaptatif (162) étant configuré pour recevoir une entrée d'état d'application indiquant un changement dans un état d'application (114) d'une application informatique (112) et pour recevoir des données de clavier (118), les données de clavier (118) comprenant des données d'image et des données de définition de clavier, dans lequel le contrôleur (160) est configuré pour, en réponse à l'entrée d'état d'application, régler l'affichage de clavier (154) en utilisant les données d'image et pour régler un état de définition de clavier (164) de la pluralité de touches (158) en fonction des données de définition de clavier,
le clavier étant **caractérisé en ce que** le contrôleur est configuré pour recevoir les données de clavier (118) à partir de l'application informatique (112) .

6. Clavier selon la revendication 5, dans lequel le clavier est en outre configuré pour recevoir le changement d'état d'application par l'intermédiaire d'une interface de programmation d'application publique et est en outre configuré pour afficher sur l'affichage de clavier des options utilisateur relatives au changement d'état d'application.
